# EUROPÄISCHE PATENTANMELDUNG

(11) **EP 3 291 055 A1**
(43) Veröffentlichungstag der Anmeldung: **07.03.2018**
(21) Anmeldenummer: 17185882.2
(22) Anmeldetag: 11.08.2017
(51) Int. Cl.: G06F 3/01, B25J 11/00, G06N 3/00

(54) **MULTIMODALE ZUSTANDSANZEIGE**

(30) Priorität: 31.08.2016 DE 102016216408
(71) Anmelder: BSH Hausgeräte GmbH, 81739 München (DE)
(72) Erfinder: Nero, Marcel, 80337 München (DE); Rost, Arne, 82319 Starnberg (DE); Rico Garcia, Cristina, 85521 Ottobrunn (DE); Stühler, Timo, 81671 München (DE)

(57) **Zusammenfassung**

Eine Vorrichtung zur Steuerung eines Hausgeräts umfasst eine erste und eine zweite Ausgabevorrichtung und eine Verarbeitungseinrichtung, die dazu eingerichtet ist, einen von mehreren Zuständen einzunehmen. Jedem Zustand ist wenigstens ein anderer Zustand zugeordnet, in den übergegangen werden kann, und einer der Zustände ist der Kommunikation eines Benutzers mit der Vorrichtung und einer der Kommunikation der Vorrichtung mit dem Hausgerät zugeordnet. Die Verarbeitungseinrichtung ist ferner dazu eingerichtet, den aktuellen Zustand dem Benutzer mittels der beiden Ausgabevorrichtungen anzuzeigen.

## Beschreibung

Die Erfindung betrifft einen sozialen Roboter. Insbesondere betrifft die Erfindung einen Roboter als Benutzerschnittstelle zu einem oder mehreren Hausgeräten.

Ein Hausgerät umfasst eine Schnittstelle, mittels derer ein Benutzer das Hausgerät bedienen kann. Die Schnittstelle ist üblicherweise spezifisch für das Hausgerät, sodass unterschiedliche Hausgeräte auf unterschiedliche Weisen bedient werden müssen. Ein Toaster erfordert beispielsweise das Niederdrücken eines Hebels, um ihn einzuschalten, während ein Herd mittels eines Drehschalters oder einer Sensortaste eingeschaltet wird und ein Kühlschrank üblicherweise permanent eingeschaltet bleibt.

US 2012 / 0209433 A1 schlägt einen sozialen Roboter mit mehreren Ein- und Ausgabeeinrichtungen vor.

Ein komplexer Ablauf wie das Zubereiten eines Gerichts durch einen Benutzer kann mittels mehrerer Hausgeräte erfolgen, wobei die Steuerung der Hausgeräte aufgrund ihrer unterschiedlichen Bedienkonzepte oder der sonstigen mit der Zubereitung verbundenen Handlungen uneinheitlich und schwierig sein kann.

Eine der Erfindung zu Grunde liegende Aufgabe besteht darin, eine Technik anzugeben, die eine Interaktion zwischen einem Benutzer und einem Hausgerät einfacher oder eindeutiger gestaltet. Die vorliegende Erfindung löst dieses Problem mittels der Gegenstände der unabhängigen Ansprüche. Unteransprüche geben bevorzugte Ausführungsformen wieder.

### Offenbarung der Erfindung

Eine erfindungsgemäße Vorrichtung zur Steuerung eines Hausgeräts umfasst eine erste und eine zweite Ausgabevorrichtung und eine Verarbeitungseinrichtung, die dazu eingerichtet ist, einen von mehreren Zuständen einzunehmen. Jedem Zustand ist wenigstens ein anderer Zustand zugeordnet, in den übergegangen werden kann, und einer der Zustände ist der Kommunikation eines Benutzers mit der Vorrichtung und einer der Kommunikation der Vorrichtung mit dem Hausgerät zugeordnet. Die Verarbeitungseinrichtung ist ferner dazu eingerichtet, den aktuellen Zustand dem Benutzer mittels der beiden Ausgabevorrichtungen anzuzeigen.

Durch das Gliedern der Funktionsvielfalt der Vorrichtung in Zustände kann eine klare Ordnung geschaffen sein, um die Interaktion mit dem Benutzer - und gegebenenfalls mit dem Hausgerät - zu strukturieren. Bestimmte Aktionen wie die Eingabe eines Befehls durch einen Benutzer können nur in einem der Zustände und andere Aktionen wie die Kommunikation der Vorrichtung mit dem Hausgerät nur in einem anderen Zustand möglich sein. Dabei kann entscheidend sein, dass der aktuelle Zustand dem Benutzer einfach und unmissverständlich angezeigt wird. Durch das Verwenden mehrerer Ausgabevorrichtungen kann der aktuelle Zustand auf verbesserte Weise kund getan werden und ein Benutzer kann erleichtert mit der Vorrichtung, und damit auch mit dem Hausgerät kommunizieren. Die Unterstützung des Benutzers durch das Hausgerät kann dadurch verbessert werden.

Es können eines oder mehrere Hausgeräte mittels der Vorrichtung steuerbar sein. Zu den Hausgeräten können praktisch alle elektrischen und vernetzbaren Geräte zählen, die in einem üblichen Verbraucherhaushalt angetroffen werden können, beispielsweise ein automatischer Staubsauger oder ein Küchengerät. Die Hausgeräte können insbesondere dazu eingerichtet sein, nach Art eines IoT (Internet of Things) Geräts mit einem anderen Gerät oder einer zentralen Einrichtung zu kommunizieren. Dabei kann das Hausgerät insbesondere seinen Betriebszustand mitteilen oder eine Anforderung entgegennehmen. So kann das Hausgerät verbessert durch die Vorrichtung gesteuert werden.

Es kann eine beliebige Anzahl Zustände unterstützt werden, wobei bevorzugt ist, die Zahl nicht zu groß zu wählen, um die Nachvollziehbarkeit für den Benutzer auch ohne Ein Lernzeit zu erhöhen. Bevorzugt werden ca. 3 bis 15 Zustände, weiter bevorzugt ca. 5 bis 10, noch weiter bevorzugt ca. 7 Zustände verwendet. Der Zahl und Art der Ausgabevorrichtungen sind praktisch keine Grenzen gesetzt. Insbesondere können die Ausgabevorrichtungen so ausgestaltet sein, dass sie zusammen wirken. In einer besonders bevorzugten Ausführungsform kann dadurch beispielsweise seitens der Vorrichtung der Eindruck eines biologischen Wesens hervorgerufen werden, das optische, haptische oder akustische Ausgabevorrichtungen einsetzt, um seinen Zustand darzustellen. Auch innerhalb des Zustands können Unterschiede angezeigt werden, beispielsweise wenn der Zustand zeitlich begrenzt ist und eine der Ausgabevorrichtungen auf das Ablaufen der Zeit hinweist. Freilich können innerhalb des Zustands auch Parameter angezeigt werden, die nicht auf den Zustand sondern beispielsweise auf einen Betriebszustand der Vorrichtung oder eines der Hausgeräte hinweist. Dabei kann die gleiche Ausgabevorrichtung zur Ausgabe des Parameters wie zur Ausgabe des Hinweises auf den Zustand verwendet werden. In einer Ausführungsform ist vom Zustand abhängig, ob eine Ausgabevorrichtung der Anzeige des Zustands oder eines Parameters zugeordnet ist, in einer anderen Ausführungsform kann eine Ausgabevorrichtung zur Anzeige beider Werte gleichzeitig verwendet werden. Beispielsweise kann eine optische Anzeigevorrichtung durch ihre Aktivierung auf einen bestimmten Zustand hinweisen und der Inhalt der Anzeige auf einen Parameter. In einem anderen Beispiel kann etwa die Farbe der Anzeige auf den Zustand und eine Form (etwa ein Bild oder ein Text) auf den Parameter, oder umgekehrt.

In einer Ausführungsform umfasst die Vorrichtung ferner eine erste Eingabevorrichtung zum Abtasten einer Benutzereingabe, wobei ein Übergang vom aktuellen Zustand in den weiteren Zustand auf der Basis der Benutzereingabe steuerbar ist. Übergänge in unterschiedliche weitere Zustände können mittels entsprechender Eingaben gesteuert werden.

Bevorzugt ist ferner eine zweite Eingabevorrichtung vorgesehen, wobei jedem Übergang zugeordnet ist, welche Eingabevorrichtung verwendet werden kann. Beispielsweise kann einem Übergang vom aktuellen Zustand in einen ersten weiteren Zustand die erste Eingabevorrichtung und einem Übergang in einen zweiten weiteren Zustand die zweite Eingabevorrichtung zugeordnet sein. In einer Ausführungsform ist einem Übergang von unterschiedlichen Zuständen in den selben Zustand immer die gleiche Eingabevorrichtung zugeordnet.

Die erste Eingabevorrichtung kann die Benutzereingabe optisch, akustisch oder haptisch aufnehmen und die zweite Eingabevorrichtung auf eine andere Weise als die erste Eingabevorrichtung. So können unterschiedliche Kommunikationsweisen, etwa optisch haptisch und akustisch, einfach und nachvollziehbar unterschiedlichen Zuständen zugeordnet sein. Mittels einer beispielsweise optischen Eingabe wird dann in einen der weiteren Zustände übergegangen und mittels einer beispielsweise akustischen Eingabe in einen anderen der weiteren Zustände übergegangen. Das Bedienkonzept mit den Zuständen kann dadurch verbessert klar und eindeutig gegliedert sein.

In ähnlicher Weise kann die erste Ausgabevorrichtung den Zustand optisch, akustisch oder haptisch anzeigen, wobei die zweite Ausgabevorrichtung den Zustand auf eine andere Weise als die erste Ausgabevorrichtung anzeigt.

Es ist besonders bevorzugt, dass die Verarbeitungseinrichtung dazu eingerichtet ist, mittels wenigstens einer der Ausgabevorrichtungen einen Hinweis auszugeben, welche Eingabevorrichtung im aktuellen Zustand für die Benutzereingabe verwendet werden kann. Dadurch kann angezeigt werden, welche Eingabevorrichtung einem Übergang zugeordnet ist, der vom aktuellen Zustand aus verwendet werden kann. Eine irrtümliche Betätigung einer Eingabevorrichtung, die keinem oder einem nicht beabsichtigten weiteren Übergang zugeordnet ist, kann so verbessert ausgeschlossen werden. Die Wahl der korrekten Eingabevorrichtung kann für den Benutzer anhand der jeweiligen Ausgabevorrichtung erleichtert sein. Das Einnehmen eines nicht beabsichtigten Zustands kann verhindert werden.

Einer Ausgabevorrichtung kann eine Eingabevorrichtung zugeordnet sein, sodass der aktuelle Zustand mittels derjenigen Ausgabevorrichtung angezeigt wird, der eine Eingabevorrichtung zugeordnet ist, die zum Übergang in einen weiteren Zustand verwendet werden kann. Ist einer Eingabevorrichtung kein gültiger Übergang zugeordnet, so kann sie deaktiviert sein. Beispielsweise kann ein Touchscreen eine haptische Eingabevorrichtung mit einer optischen Ausgabeeinrichtung kombinieren, wobei optisch angezeigt werden kann, welche haptische Eingabe zu einem gewünschten Übergang führen kann. In ähnlicher Weise können auch andere Ein- und Ausgabevorrichtungen paarweise einander zugeordnet sein, um eine verbesserte Interaktion mit dem Benutzer zu ermöglichen.

Der aktuelle Zustand kann beispielsweise mittels einer symbolischen optischen Darstellung eines Gesichts ausgedrückt werden. Dadurch kann der Zustand universell und leicht erkennbar übermittelt werden.

Dabei kann das Gesicht eine symbolische Strichdarstellung umfassen. Eine Benutzerschnittstelle kann so einfach und intuitiv gehalten sein.

Das Gesicht kann ferner eine kreisbogenförmige Begrenzung und zwei kreisbogenförmige Augen umfassen. Durch diese Abstraktion kann das Gesicht einfach und überzeugend dargestellt werden. Der Zustand der Vorrichtung kann so verbessert ohne Ablenkung an den Benutzer übermittelt werden.

Die kreisbogenförmige Begrenzung kann eine Aussparung aufweisen, die einen Hals symbolisiert, oder sie kann in zwei Teile untergliedert sein, die Ohren symbolisieren.

In einer weiteren Ausführungsform kann das Gesicht animiert werden. Dazu können insbesondere Parameter, die die Kreisbögen definieren, zeitlich variiert werden. Beispielsweise kann eine Größe der Ohren von einer akustischen Ausgabe oder einer akustischen Eingabe abhängen.

Zusätzlich umfasst die Erfindung ein Hausgerät mit einer erfindungsgemäßen Vorrichtung sowie ein Verfahren zum Steuern eines Hausgeräts mittels eine Vorrichtung, die eine erste und eine zweite Ausgabevorrichtung sowie eine Verarbeitungseinrichtung, die sich in einem von mehreren Zuständen befinden kann, umfasst. Jedem Zustand ist wenigstens ein anderer Zustand zugeordnet, in den übergegangen werden kann, und einer der Zustände ist der Kommunikation eines Benutzers mit der Vorrichtung und einer der Zustände der Kommunikation der Vorrichtung mit dem Hausgerät zugeordnet. Das Verfahren weist dabei den Schritt auf des Anzeigens eines aktuellen Zustands, den die Verarbeitungseinrichtung einnimmt, mittels der Ausgabevorrichtungen.

In einer bevorzugten Ausführungsform umfasst die Kommunikation des Benutzers mit der Vorrichtung eine natürlichsprachige Ein- oder Ausgabe. Dadurch kann einerseits ein Übergang der Vorrichtung in unterschiedliche Zustände gesteuert werden, andererseits kann eine Steuerung des Hausgeräts auf akustische Weise ermöglicht sein. Die beiden Steuerungen können miteinander verzahnt durchgeführt werden, sodass eine Eingabe sowohl einen Übergang der Vorrichtung in einen anderen Zustand als auch das Ausgeben einer Anweisung an das Hausgerät umfasst.

Eine Ein- oder Ausgabe der Vorrichtung kann von einem Betriebszustand des Hausgeräts abhängig sein. Anders ausgedrückt kann der Betriebszustand des Hausgeräts darüber entscheiden, in welchem Zustand sich die Vorrichtung aktuell befindet oder welcher Übergang in einen weiteren Zustand möglich ist. In noch einer weiteren Ausführungsform können der aktuelle Zustand oder die Freigabe einzelner Übergänge oder weiterer Zustände auf der Basis eines Verhaltens des Benutzers ermöglicht oder verhindert werden. Übersteigt die Distanz zwischen dem Benutzer und der Vorrichtung beispielsweise einen vorbestimmten Schwellenwert, so kann eine haptische Eingabe verhindert werden. Gleichzeitig kann eine optische Ausgabe zugunsten einer akustischen Ausgabe unterdrückt werden. Übersteigt in einem anderen Beispiel eine Lautstärke eines Hintergrundgeräuschs einen anderen vorbestimmten Schwellenwert, so kann von einer akustischen auf eine optische Ausgabe umgeschaltet werden.

Die Erfindung wurde mit Bezug auf eine Vorrichtung, ein Hausgerät sowie ein Verfahren erläutert. Sofern nichts Anderes angegeben ist, sind Merkmale einer Anspruchskategorie analog auf die anderen Anspruchskategorien anwendbar.

Bevorzugte Ausführungsformen der Erfindung werden nun unter Bezug auf die beiliegenden Figuren genauer beschrieben, wobei:
- Fig. 1: eine Vorrichtung zur Steuerung eines Hausgeräts;
- Fig. 2: ein Ablaufdiagramm eines Verfahrens zum Steuern eines Hausgeräts;
- Fig. 3: beispielhafte Ausdrucksweisen einer Vorrichtung zum Steuern eines Hausgeräts;
- Fig. 4: beispielhafte Symbole zur Kennzeichnung ausgewählter Zustände;
- Fig. 5: eine Darstellung eines Gesichts;

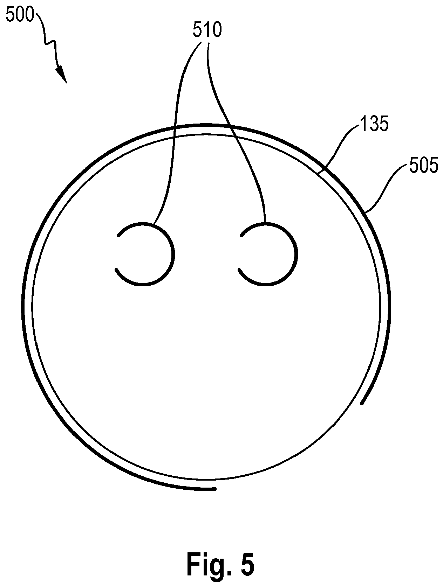

- Fig. 5 bis 16: Darstellungen und Animationen von beispielhaften Kennzeichnungen eines Zustands auf der Basis eines Gesichts; und

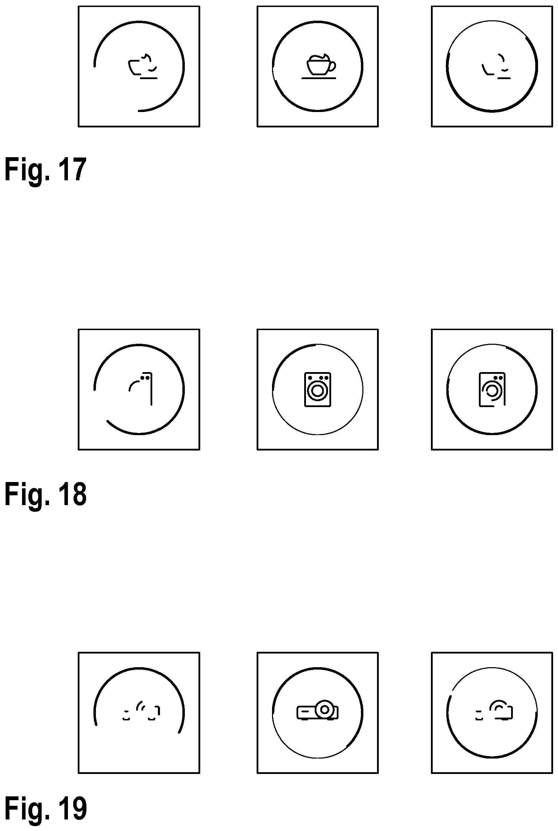

- Fign. 17 bis 22: Darstellungen und Animationen von beispielhaften Symbolen
darstellt.

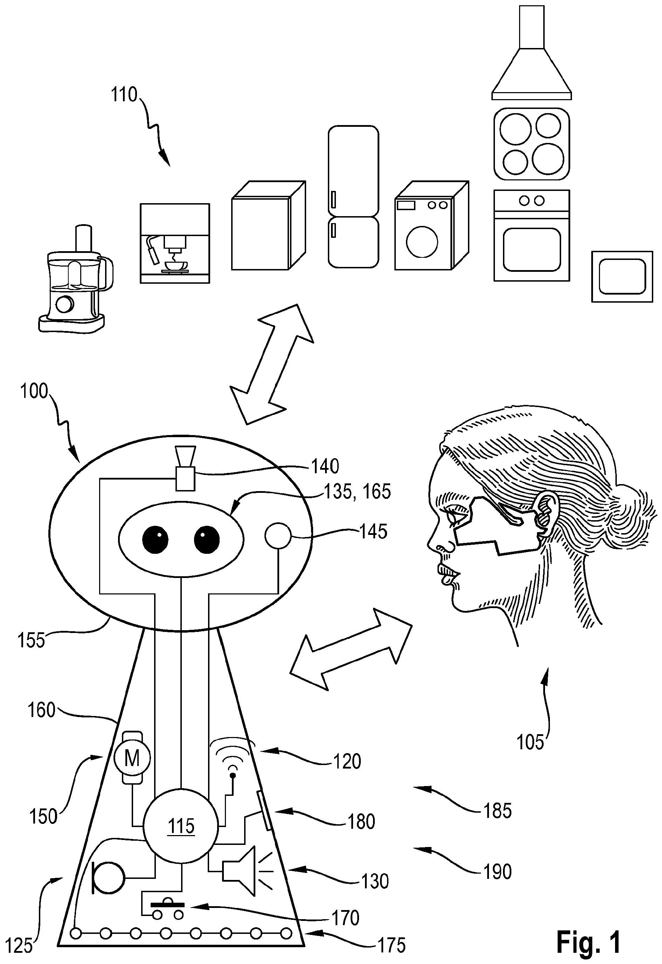

Figur 1 zeigt eine Vorrichtung 100 zur Unterstützung einer Kommunikation zwischen einem Benutzer 105 und einem Hausgerät 110. Insbesondere können auch mehrere Hausgeräte 110 nacheinander, gleichzeitig oder miteinander vernetzt gesteuert werden. Exemplarisch sind als Hausgeräte 110 eine Schneidemaschine, eine Kaffeemaschine, ein Geschirrspüler, ein Kühl- und Gefrierschrank, eine Waschmaschine, ein Ofen, ein Herd, eine Dunstabzugshaube und ein Mikrowellenofen dargestellt. Es können jedoch auch andere Hausgeräte 110 gesteuert werden. Die Hausgeräte 110 befinden sich bevorzugt alle in demselben Haushalt. In einer besonders bevorzugten Ausführungsform befinden sich alle gesteuerten Hausgeräte 110 im gleichen Raum des Haushalts, wobei der Raum insbesondere eine Küche sein kann. Als Küche kann ein Raum angesehen werden, in dem wenigstens ein Herd oder Ofen steht, wobei dieser nicht notwendigerweise mittels der Vorrichtung 100 steuerbar sein muss.

Die Vorrichtung 100 ist dazu eingerichtet, eine Eingabe des Benutzers 105 abzutasten, die Eingabe in ein Signal umzuwandeln und das Signal dem Hausgerät 110 bereitzustellen. Jedes steuerbare Hausgerät 110 verfügt daher bevorzugt über eine Schnittstelle, die bevorzugt drahtlos ausgeführt ist. Außerdem ist die Vorrichtung 100 dazu eingerichtet, ein Signal des Hausgeräts 110 abzutasten, das Signal in eine Ausgabe umzuwandeln und die Ausgabe dem Benutzer 105 bereitzustellen.

Die Vorrichtung 100 umfasst eine Verarbeitungseinrichtung 115, eine bevorzugt drahtlose Schnittstelle 120 sowie bevorzugt einen oder mehrere Sensoren oder Aktoren. Beispielsweise können eine akustische Eingabevorrichtung 125, eine akustische Ausgabevorrichtung 130, eine Anzeigevorrichtung 135, ein Projektor 140 oder eine Kamera 145 vorgesehen sein. Die Anzeigevorrichtung 135 kann insbesondere im Bereich des Kopfabschnitts 155 angebracht sein und beispielsweise eine rechteckige, elliptische oder kreisrunde Anzeigefläche aufweisen. Die akustische Eingabevorrichtung 125 kann mehrfach ausgeführt sein, um eine Ortung einer Geräuschquelle nach dem Stereo-Prinzip zu erlauben. Beispielsweise können mehrere akustische Eingabevorrichtungen 125 auf einem Umkreis angeordnet sein. Bevorzugt wird eine Ortungsgenauigkeit von ca. ±15° bei einer Entfernung der Geräuschquelle von ca. 4 m erreicht. In Verbindung mit der Kamera 145 kann die Verarbeitungsvorrichtung 115 dazu eingerichtet sein, einen Gegenstand, eine Person, einen Gesichtsausdruck oder eine Körperhaltung einer Person zu erkennen. Es können auch mehrere akustische Ausgabevorrichtungen 130 vorgesehen sein, um eine gerichtete Ausgabe von akustischen Informationen zu erlauben.

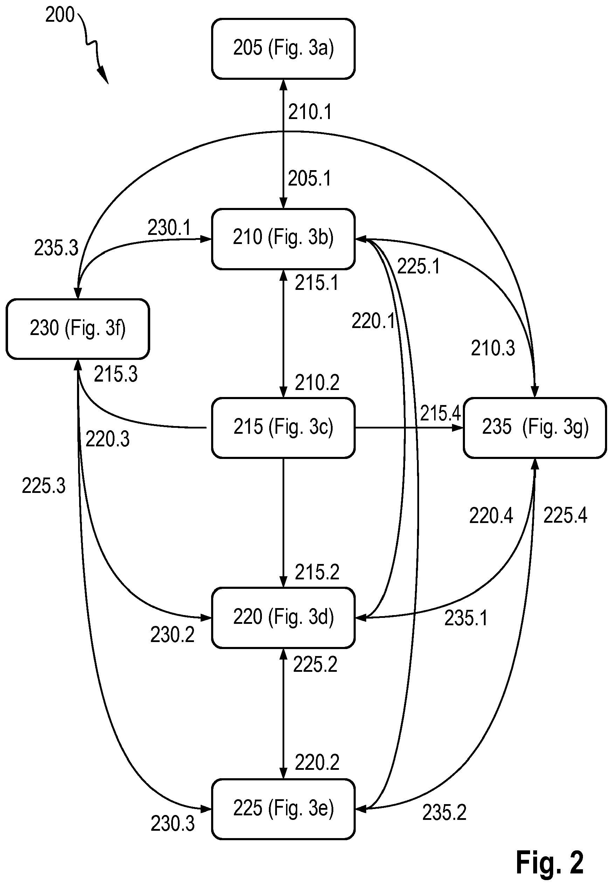

Weitere mögliche Sensoren und Aktoren werden unten mit Bezug auf Figur 2 beschrieben. In einer weiteren Ausführungsform kann auch ein mechanischer Aktor 150 vorgesehen sein, um einen Teil der Vorrichtung 100 zu bewegen. In der dargestellten Ausführungsform kann beispielsweise ein rundlich dargestellter Kopfabschnitt 155 gegenüber einem Basisabschnitt 160 verschwenkt, gedreht oder verschoben werden. Aktoren oder Sensoren, die speziell auf den Benutzer 105 ausgerichtet werden sollen, sind hierbei bevorzugt am Kopfabschnitt 155 angebracht. Ferner kann die Position des Kopfabschnitts 155 zum Ausdrücken von Emotionen verwendet werden. Die Verarbeitungseinrichtung 115 ist bevorzugt dazu eingerichtet, eine natürlichsprachige Eingabe des Benutzers 105 mittels der Eingabevorrichtung 125 abzutasten und zu analysieren. Die Eingabevorrichtung 125 kann mehrfach vorgesehen sein, sodass nach dem Stereoprinzip eine zumindest grobe Ortung des Benutzers 105 relativ zur Vorrichtung 100 möglich sein kann. Die Ausgabevorrichtung 130 kann ferner dazu eingerichtet sein, ein Signal in eine gesprochene Nachricht umzuwandeln ("Text to Speech", Text in Sprache) und mittels der akustischen Ausgabevorrichtung 130 auszugeben. Der Projektor 140 kann auf eine Arbeitsoberfläche oder eine Wand gerichtet werden. Mittels des Projektors 140 und/oder der Anzeigevorrichtung 135 können graphische oder textuelle Ausgaben erfolgen. Insbesondere können auf diesem Weg ein Auge oder ein Augenpaar dargestellt werden, bevorzugt in Abhängigkeit einer zuvor bestimmten empathischen Emotion. In einer weiteren Ausführungsform ist auch eine haptische Eingabevorrichtung 165 vorgesehen, die insbesondere mit der Anzeigevorrichtung 135 integriert als Touchscreen ausgeführt sein kann. In einer Ausführungsform ist die haptische Eingabevorrichtung 165 dazu eingerichtet, eine manuelle Navigation durch eine klassische Benutzerschnittstelle zu erlauben, um die Vorrichtung 100 zu steuern. In einer weiteren Ausführungsform ist die haptische Eingabevorrichtung 165 dazu eingerichtet, eine taktile Äußerung wie eine Berührung, ein Streichen oder Streicheln, ein Klopfen oder ein Schlagen zu erfassen.

Ein Taster 170 kann im Bereich des Basisabschnitts 160 oder auch im Bereich des Kopfabschnitts 155 vorgesehen sein. Der Taster 170 kann einfarbig oder mehrfarbig beleuchtbar sein. In weiteren Ausführungsformen können auch mehrere Taster 170 vorgesehen sein, beispielsweise einer für eine positive Eingabe (ja / Bestätigen) und einer für eine negative Eingabe (nein / Abbrechen). Ein Leuchtring 175 kann insbesondere auf einem Umfang um eine Hochachse der Vorrichtung 100 angeordnet sein. Der Leuchtring 175 kann eine Anzahl Leuchtdioden oder anderer Leuchtmittel umfassen, die entlang einer Linie oder Kurve angeordnet sind. Dabei ist der Leuchtring 175 bevorzugt in Bodennähe angebracht, also im Bereich eines unteren Endes des Basisabschnitts 160. Eine Matrixanzeige 180 kann als weitere Ausgabevorrichtung bereitgestellt sein. In einer Ausführungsform ist die Matrixanzeige auf der Innenseite eines semitransparenten Abschnitts eines Gehäuses der Vorrichtung 100, insbesondere im Bereich des Basisabschnitts 160, angeordnet.

Die Vorrichtung 100 ist bevorzugt dazu eingerichtet, sich zumindest ansatzweise wie ein zusätzliches Familienmitglied einer Familie darzustellen, die in dem Haushalt lebt. Die Interaktion mit der Vorrichtung 100 ist bevorzugt leicht zu erlernen oder durchzuführen, macht Freude und kann in die täglichen Abläufe der Benutzer 105 im Haushalt auf natürliche Weise eingebunden werden. Die Erfüllung dieser Ziele werden insbesondere durch die Spracheingabe und Sprachausgabe oder die Darstellbarkeit graphischer Informationen mittels der Anzeigeeinrichtung 135 oder des Projektors 140 unterstützt. Außerdem wird angestrebt, dass eine soziale Interaktion auf der Basis einer Emotion des Benutzers 105 und einer daraus abgeleiteten empathischen Emotion der Vorrichtung 100 zur Unterstützung der Interaktion eingesetzt wird. Das Ausdrücken der empathischen Emotion kann unterschiedliche Aspekte umfassen, beispielsweise optisch, akustisch oder durch eine Bewegung. Eines oder mehrere Hausgeräte 110 können durch die Vorrichtung 100 teilweise automatisch gesteuert werden. Beispielsweise kann eine situationsabhängige Steuerung erfolgen, sodass ein Betriebszustand eines Hausgeräts 110 Einfluss auf den Betriebszustand eines anderen Hausgeräts 110 haben kann. Die Vorrichtung 100 kann als Konzentrator ("Hub") für Geräte dienen, die nach dem Gedanken des Internet der Dinge ("Internet of Things", IoT) netzwerkfähig sind. Dazu können auch andere Geräte als die Hausgeräte 110 mit der Vorrichtung 100 verbunden werden.

Einrichtungen der Vorrichtung 100, die zur Eingabe durch den Benutzer 105 verwendet werden können, sind hier als Eingabevorrichtungen 185 zusammengefasst und Einrichtungen, die zur Ausgabe von Informationen an den Benutzer 105 eingerichtet sind, werden Ausgabevorrichtungen 190 genannt. Zu den Eingabevorrichtungen 185 können beispielsweise die akustische Eingabevorrichtung 125, die Kamera 145, die haptische Eingabevorrichtung 165 und der Taster 170 gezählt werden. Zu den Ausgabevorrichtungen 190 können die akustische Ausgabevorrichtung 130, die Anzeigevorrichtung 135, der Projektor 140, der Aktor 150 und die Matrixanzeige 180 gezählt werden. Weitere Einrichtungen der Vorrichtung 100 sind jeweils möglich.

Die Vorrichtung 100 kann auch spezifische Dienste anbieten, die insbesondere in einer Küche vom Benutzer 105 als hilfreich empfunden werden können. Beispielsweise kann eine Schritt-für-Schritt-Unterstützung beim Kochen nach Rezept erfolgen. Die Vorrichtung 100 kann zum Auffinden eines gewünschten Rezepts verwendet werden und eine optische Anleitung während des Kochprozesses anbieten. Mehrere Benutzer 105 an unterschiedlichen Orten können miteinander kochen, indem sie über Videofunktion der Vorrichtung 100 miteinander verbunden werden. In ähnlicher Weise kann der Benutzer 105 an einem Kochkurs teilnehmen, um seine Kochkünste zu verbessern. Die eigene Küche muss er dazu nicht verlassen. Die Vorrichtung 100 kann auch allgemeine Wissens- oder Informationsfragen beantworten, beispielsweise nach einem aktuellen Wetter oder einer Nachrichtenlage. Die Vorrichtung 100 kann zum Abspielen eines Films oder von Musik genutzt werden. Sollte eines der Hausgeräte110 ein Problem zeigen, so kann mittels der Vorrichtung 100 ein Kundendienst kontaktiert werden.

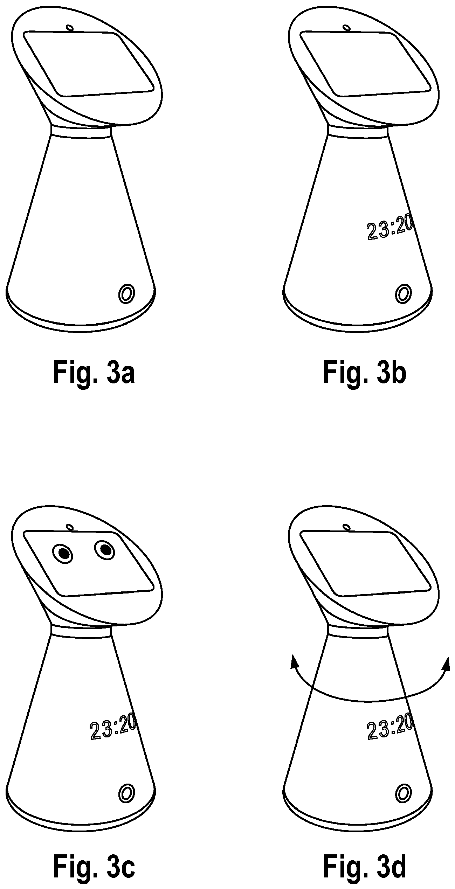

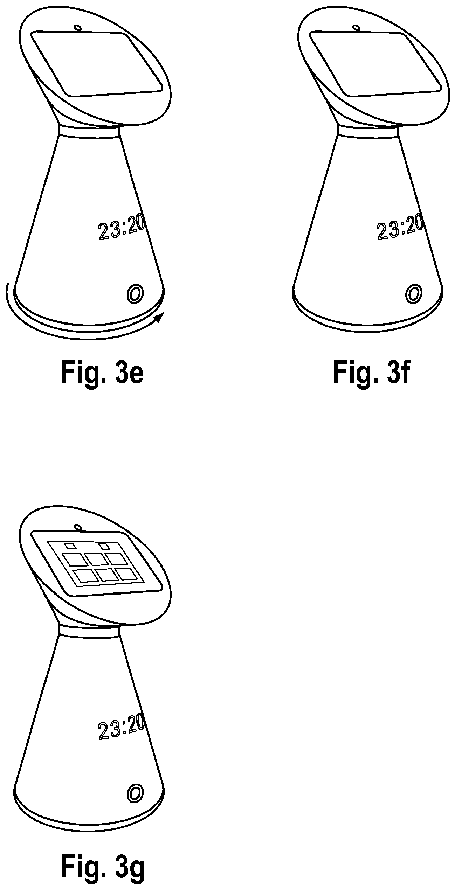

Figur 2 zeigt ein Verfahren 200, das beispielhafte Zustände und Übergänge der Vorrichtung 100 aus Fig. 1 darstellt. Zustände Stromlos 205, Aus 210, Bereit 215, Dialog 220, Laden 225, Pause 230 und Berührung 235 stehen für exemplarische Zustände, in denen die Vorrichtung 100 auf jeweils unterschiedliche Art und Weise mit einem Benutzer 105 kommunizieren kann. Jedem Zustand ist eine andere Ausdrucksweise zugeordnet, die dem Benutzer 105 jeweils mittels mehrerer Ausgabeeinrichtungen parallel angezeigt werden kann. In Fig. 3 sind beispielhafte, den Zuständen 205 bis 235 zugeordnete Ausdrucksweisen der Vorrichtung 100 dargestellt.

Für das Verfahren 200 werden unterschiedlich lange Betätigungen des Tasters 170 unterschieden. Dabei wird beispielhaft eine Betätigung als kurz betrachtet, wenn sie weniger als ca. 5 Sekunden lang erfolgt, und als lang, wenn sie ca. 5 Sekunden oder länger dauert. Andere Zeiten, anhand derer unterschiedlich lange Tastendrücke unterschieden werden können, sind ebenfalls möglich. Ein Schlüsselwort, das in Form eines Namens benutzt wird, um eine gezielte Nachricht des Benutzers 105 an die Vorrichtung 100 anzuzeigen, ist hier exemplarisch als "Mykie" gewählt. Andere Schlüsselwörter bzw. Namen sind ebenfalls möglich und in einer Ausführungsform kann der Benutzer 105 den Namen der Vorrichtung 100 selbst wählen bzw. vergeben.

Der Zustand Stromlos 205 wird eingenommen, wenn die Vorrichtung 100 nicht mit einer Stromquelle verbunden ist. Mögliche Übergänge aus dem Zustand Stromlos 205:
- in einem Schritt 205.1 in den Zustand Aus 210 durch Verbinden der Vorrichtung 100 mit einer Stromquelle

Der Zustand Aus 210 wird eingenommen, wenn die Vorrichtung 100 zwar mit einer Stromquelle verbunden, aber nicht eingeschaltet ist. In diesem Zustand kann die Vorrichtung 100 durch Interaktion des Benutzers 105 in einen anderen Zustand versetzt werden, in dem eine echte Interaktion möglich ist. Trotzdem kann die Vorrichtung in diesem Zustand einfache Dienste erfüllen, beispielsweise das nicht-interaktive Anzeigen eines Parameters wie der Zeit. Mögliche Übergänge aus dem Zustand Aus 210:
- in einem Schritt 210.1 in den Zustand Stromlos 205 durch Trennen der Vorrichtung 100 von der Stromquelle
- in einem Schritt 210.2 in den Zustand Bereit 215 durch Drücken des Tasters 170
- in einem Schritt 210.3 in den Zustand Berühren 235 durch langes Drücken des Tasters 170

Der Zustand Bereit 215 wird eingenommen, wenn die Vorrichtung 100 unmittelbar betriebsfähig ist. In einigen Ausführungsformen kann dieser Zustand einem Schlafzustand entsprechen. Eine Interaktion mit dem Benutzer 105 aus diesem Zustand heraus ist möglich, allerdings sind für die weitere Ein- oder Ausgabe von Informationen weitere Zustände vorgesehen, in die vom Zustand Bereit 215 aus übergegangen werden kann. Mögliche Übergänge aus dem Zustand Bereit 215:
- in einem Schritt 215.1 in den Zustand Aus 210 durch langes Drücken des Tasters 170
- in einem Schritt 215.2 in den Zustand Dialog 220 durch Spracheingabe "Hallo Mykie"
- in einem Schritt 215.3 in den Zustand Pause 230 automatisch nach ca. 10 Minuten ohne Eingabe
- in einem Schritt 215.4 in den Zustand Berühren 235 durch Berühren der haptischen Eingabevorrichtung 165

Der Zustand Dialog 220 wird eingenommen, wenn eine akustische Eingabe des Benutzers 105 erfolgen soll. Mögliche Übergänge aus dem Zustand Dialog 220:
- in einem Schritt 220.1 in den Zustand Aus 210 durch langes Drücken des Tasters 170
- in einem Schritt 220.2 in den Zustand Laden 225 automatisch, wenn eine Verarbeitung länger als ca. 3 s dauert
- in einem Schritt 220.3 in den Zustand Pause 230 automatisch nach ca. 10 Minuten ODER durch Spracheingabe "Mykie geh schlafen" ODER durch kurzes Drücken des Tasters 170
- in einem Schritt 220.4 in den Zustand Berührung 235 durch Berühren der haptischen Eingabevorrichtung 165

Der Zustand Laden 225 wird eingenommen, wenn die Vorrichtung 100 einen Benutzerauftrag verarbeitet oder erfüllt. Mögliche Übergänge aus dem Zustand Laden 225:
- in einem Schritt 225.1 in den Zustand Aus 210 durch langes Drücken des Tasters 170
- in einem Schritt 225.2 in den Zustand Dialog 220 automatisch ODER durch Drücken eines Abbruch-Tasters, beispielsweise des Tasters 170
- in einem Schritt 225.3 in den Zustand Pause 230 durch kurzes Drücken des Tasters 170
- in einem Schritt 225.4 in den Zustand Berühren 235 automatisch ODER durch Drücken eines Abbruch-Tasters, beispielsweise des Tasters 170

Der Zustand Pause 230 wird eingenommen, wenn die Vorrichtung 100 eingeschränkt betriebsfähig ist. Ein Aktivitätsgrad der Vorrichtung 100 ist in diesem Zustand üblicherweise geringer als im Zustand Bereit 215, aber höher als im Zustand Aus 210. Mögliche Übergänge aus dem Zustand Pause 230:
- in einem Schritt 230.1 in den Zustand Aus 210 automatisch nach ca. 20 Minuten ODER langes Drücken des Tasters 170
- in einem Schritt 230.2 in den Zustand Dialog 220 durch Spracheingabe "Hallo Mykie" ODER Anstubsen der Vorrichtung 100 ODER kurzes Drücken des Tasters 170
- in einem Schritt 230.3 in den Zustand Laden 225 durch Berühren der haptischen Eingabeeinrichtung 165

Der Zustand Berührung 235 wird eingenommen, wenn der Benutzer 105 durch eine Berührung auf die Vorrichtung 100 einwirkt. Mögliche Übergänge aus dem Zustand Berührung 235:
- in einem Schritt 235.1 in den Zustand Dialog 220 durch Spracheingabe "Hallo Mykie" ODER Drücken eines Spracheingabetasters wie des Tasters 170 ODER automatisch nach 5 Sekunden
- in einem Schritt 235.2 in den Zustand Laden 225 automatisch
- in einem Schritt 235.3 in den Zustand Pause 230 durch kurzes Drücken des Tasters 170

Es ist zu beachten, dass in anderen Ausführungsformen auch andere Zustände 205 - 235 und/oder Übergänge zwischen den Zuständen 205 - 235 vorgesehen sein können.

Die beschriebenen Zustände 205 - 235 beschreiben in erster Linie eine Interaktion zwischen dem Benutzer 105 und der Vorrichtung 100. Dabei ist die Vorrichtung 100 bevorzugt dazu eingerichtet, die Interaktion mit dem Benutzer stellvertretend oder aggregierend für eines oder mehrere Hausgeräte 110 zu führen. Ein Austausch von Informationen zwischen der Vorrichtung 100 und einem der Hausgeräte 110 findet bevorzugt im Zustand Laden 225 statt. Dabei kann insbesondere eine Anforderung von der Vorrichtung 100 an das Hausgerät 110 oder ein Betriebszustand vom Hausgerät 110 an die Vorrichtung 100 übermittelt werden. Die Anforderung kann auf der Basis einer Eingabe des Benutzers 105 an die Vorrichtung, insbesondere im Schritt 220, bestimmt sein. Der Betriebszustand des Hausgeräts 110 kann im Zustand 225 Laden der in einem der anderen Betriebszustände des Verfahrens 200 dem Benutzer in geeignet aufbereiteter Form dargeboten werden. Auf diese Weise kann die Vorrichtung 100 als Benutzerschnittstelle ("front end" oder "proxy") für eines oder mehrere Hausgeräte 110 verwendet werden. So kann die Steuerung des Hausgeräts 110 beispielsweise mittels akustischer oder haptischer Eingaben erfolgen. Eine Sprachsteuerung eines Hausgeräts 110 oder eine Sprachausgabe eines Hausgeräts 110 können realisiert werden. Bedienkonzepte mehrerer Hausgeräte 110 können mittels der Vorrichtung 100 aufeinander abgestimmt sein. Beispielsweise können einheitliche Metaphern, Bedienelemente oder Bezeichnungen für Aktionen oder Bedienelemente verwendet werden. Es können auch mehrere Hausgeräte 110 gleichzeitig gesteuert werden, beispielsweise um einen Ablauf zu unterstützen, an dem mehrere Hausgeräte 110 beteiligt sind.

Figur 3 zeigt beispielhafte Ausdrucksweisen der Vorrichtung 100 in Abhängigkeit eines Zustands. Jede Ausdrucksweise umfasst wenigstens zwei für einen Benutzer 105 erfassbare Ausgaben, die auf den Zustand 205 - 235 hinweisen, die die Vorrichtung aktuell einnimmt. Die Ausdrucksweisen sind für Zustände des beispielhaften Verfahrens 200 von Figur 2 gewählt; in anderen Ausführungsformen können auch andere oder zusätzliche Ausdrucksweisen gewählt sein. Jede der im Folgenden beschriebenen Ausgaben oder Ansteuerungen von Ausgabevorrichtungen kann auch geändert, weggelassen oder einem anderen Zustand 205 - 235 zugeordnet werden. Außerdem sind jeweils modifizierte oder zusätzliche Ausgaben der Vorrichtung 100 möglich.

Figur 3a zeigt die Vorrichtung 100 in einer Ausdrucksweise, die dem Zustand Stromlos 205 von Fig. 2 entspricht. Die Anzeigevorrichtung 135, der Projektor 140, der Taster 170, der Leuchtring 175 und die Matrixanzeige 180 sind unbeleuchtet.

Figur 3b zeigt die Vorrichtung 100 in einer Ausdrucksweise, die dem Zustand Aus 210 von Figur 2 entspricht. Die Matrixanzeige 180 und gegebenenfalls der Taster 170 sind beleuchtet. Die Matrixanzeige 180 zeigt bevorzugt einen vorbestimmten Parameter an, beispielsweise eine Uhrzeit, eine Temperatur oder einen Luftdruck.

Bei einem Übergang vom Zustand Aus 210 in den Zustand Bereit 215 kann eine vorbestimmte Animation dargestellt werden. Beispielsweise kann der Kopfabschnitt 155 gegenüber dem Basisabschnitt 160 angehoben werden, um den Eindruck des Hebens eines Kopfes darzustellen. Ein Auge oder ein Augenpaar kann auf der Anzeigevorrichtung 135 dargestellt werden. Das Augenpaar kann Aufwachbewegungen zeigen, etwa ein Blinzeln, ein langsames Öffnen eines Augenlids etc. Der Leuchtring 175 kann eine Animation nach Art eines Fortschrittsbalkens zeigen, sodass alle Leuchtmittel des Leuchtrings 175 aktiviert sind, wenn der Übergang vollständig erfolgt ist.

Figur 3c zeigt die Vorrichtung 100 in einer Ausdrucksweise, die dem Zustand Bereit 215 von Figur 2 entspricht. Auf der Ausgabevorrichtung 135 ist ein Augenpaar dargestellt. Das Augenpaar 105 ist bevorzugt auf keinen bestimmten Punkt fixiert oder fokussiert. Während die Vorrichtung 100 in diesem Zustand verbleibt, kann das Augenpaar kleine zufällige Bewegungen vollführen. In einer anderen Ausführungsform können die Augen geschlossen dargestellt werden. Der Kopfabschnitt 155 kann gegenüber dem Basisabschnitt 160 in horizontaler und/oder vertikaler Richtung in kleinen Beträgen und zufälligen Richtungen geschwenkt werden.

Figur 3d zeigt die Vorrichtung 100 in einer Ausdrucksweise, die dem Zustand Dialog 220 von Figur 2 entspricht. Ein Benutzer 105 kann mit dem Augenpaar auf der Anzeigevorrichtung 135 verfolgt werden, dabei kann versucht werden, einen Augenkontakt zu den Augen des Benutzers 105 herzustellen. Der Kopfabschnitt 155 kann so ausgerichtet werden, dass das Verfolgen des Benutzers 105 verbessert durchgeführt werden kann. Die Position des Benutzers 105 kann mittels mehrerer akustischer Eingabevorrichtungen 125 auf der Basis des Stereo-Effekts (Laufzeitdifferenz) bestimmt werden. Der Eingabetaster 170 kann in einer Signalfarbe beleuchtet werden, die dem Zustand Dialog 220 zugeordnet ist.

Figur 3e zeigt die Vorrichtung 100 in einer Ausdrucksweise, die dem Zustand Laden 225 von Figur 2 entspricht. Leuchtmittel des Leuchtrings 175 können sukzessive eingeschaltet werden, sodass sich der Eindruck eines Fortschrittsbalkens ergibt. Der Leuchtring 175 kann auch zur Animation eines um die Vorrichtung 100 wandernden Lichtpunkts oder Lichtbands angesteuert werden. Das Augenpaar auf der Anzeigevorrichtung 135 kann auf eine Weise dargestellt werden, die dem Zustand 225 Laden entspricht. Dazu kann das Augenpaar beispielsweise nach oben verdreht sein, um Nachdenklichkeit zu reflektieren, oder die Augen können eine Lesebewegung simulieren, um auf ein Nachschlagen oder Nachlesen angeforderter Informationen hinzuweisen.

Figur 3f zeigt die Vorrichtung 100 in einer Ausdrucksweise, die dem Zustand Pause 230 von Figur 2 entspricht. Diese Ausdrucksweise kann sich vom Zustand 215 Bereit beispielsweise dadurch unterscheiden, dass das Augenpaar auf der Anzeigevorrichtung 135 starr ist oder auf den Benutzer 105 gerichtet bleibt.

Figur 3g zeigt die Vorrichtung 100 in einer Ausdrucksweise, die dem Zustand Berührung 235 von Figur 2 entspricht. Das Augenpaar kann von der Anzeigevorrichtung 135 gelöscht werden, beispielsweise indem es nach oben aus dem sichtbaren Bereich geschoben wird. Stattdessen kann auf der Anzeigevorrichtung 135 ein Menü angezeigt werden, das verschiedene mögliche Kommandos anzeigt. Der Kopfabschnitt 155 wird bevorzugt zum Benutzer 105 angehoben und behält bevorzugt diese Stellung bezüglich des Benutzers 105.

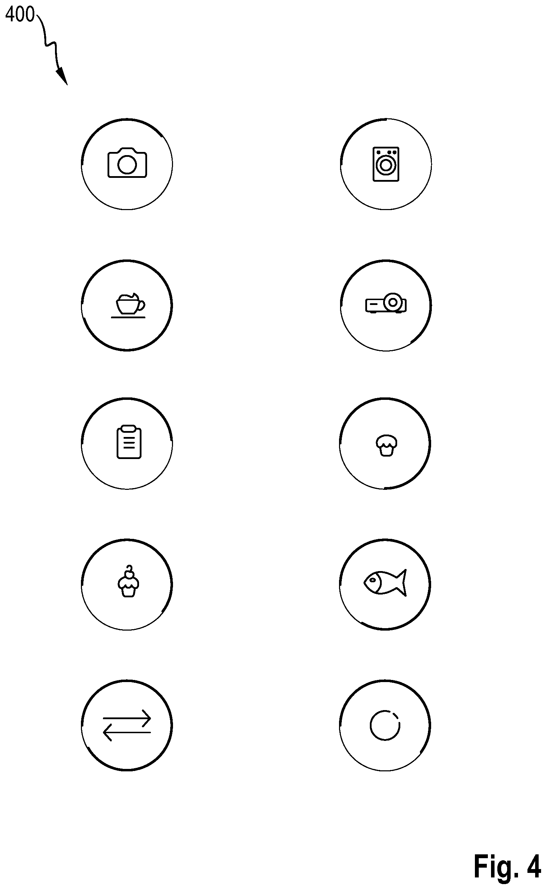

Figur 4 zeigt beispielhafte optische Symbole 400 für vorbestimmte Zustände, entsprechend den beispielhaft gezeigten Zuständen 205-235 in Fig. 2. Von links nach rechts und von oben nach unten sind folgende beispielhaften Symbole 400 für ausgewählte Zustände dargestellt: Kamera, Waschmaschine, Kaffeemaschine, Projektor, Einkaufsliste, Rezept 1, Rezept 2, Rezept 3, Verbindung und Suchen. Einige der Symbole 400 können auf ein Hausgerät 110 hinweisen, mit denen die Vorrichtung 100 verbunden ist. Das Symbol 400 kann beispielsweise auf eine Kommunikation mit dem Hausgerät 110 oder eine durch das Hausgerät 110 bearbeitete Aufgabe hinweisen. Die Symbole 400 können auch als Eingabefelder zum Auslösen einer Aufgabe des jeweils zugeordneten Hausgeräts 110 verwendet werden.

In der vorliegenden Ausführungsform kann ein Symbol 400 von einem Kreis- oder Ellipsenbogen umgeben sein. Ein Mittelpunktswinkel des Kreisbogens kann eine Zeit repräsentieren, beispielsweise eine abgelaufene Zeit im Vergleich einer erwarteten Zeit, die einem Vollkreis oder einem anderen vorbestimmten Winkel entsprechen kann. Der Mittelpunktswinkel kann auch dem Fortschritt einer Aufgabe entsprechen, wobei der Vollkreis oder ein anderer vorbestimmter Winkel für die gesamte Aufgabe stehen kann.

Figur 5 zeigt ein Gesicht 500, das dem Benutzer 105 mittels der Vorrichtung 100 optisch dargeboten werden kann, und zwar insbesondere mittels der Anzeigevorrichtung 135 oder des Projektors 140. Das Gesicht 500 ist bevorzugt symbolisch bzw. graphisch reduziert dargestellt. In der dargestellten Ausführungsform beschränkt sich das Gesicht 500 auf eine Begrenzung 505 und zwei Augen 510, die jeweils als Striche dargestellt werden können. Die Begrenzung 505 und die Augen 510 können insbesondere jeweils als Kreisbogen dargestellt sein, wobei jeweils ein Mittelpunktswinkel, eine Öffnungsrichtung eines zu einem Vollkreis fehlenden Abschnitts, eine Linienstärke, eine Linienfarbe oder eine Linienhelligkeit variiert werden können. In einer anderen Ausführungsform liegen den Bögen keine Kreise, sondern Ellipsen zu Grunde.

Die Begrenzung 505 kann dazu eingerichtet sein, den Eindruck eines Kopfes hervorzurufen, der das Gesicht 500 umfasst, wobei der zu einem Vollkreis fehlende Abschnitt der Begrenzung 505 einen Hals symbolisieren kann. Der Hals kann als Bezugsrichtung "unten" verwendet werden. Die Augen 510 sind bevorzugt in einer oberen Hälfte der Begrenzung 505 dargestellt. Eine Ausrichtung einer Achse, die Mittelpunkte der Augen 510 miteinander verbindet, kann bezüglich der Bezugsrichtung einen vorbestimmten Winkel aufweisen, der ebenfalls variierbar sein kann. Auch Positionen der Augen 510 innerhalb der Begrenzung 505 können variiert werden, wobei ein Abstand zwischen ihren Mittelpunkten bevorzugt konstant bleibt.

In einer Ausführungsform werden die Augen 510 auf der Anzeigevorrichtung 135 dargestellt und die Begrenzung 505 mittels eines Leuchtbands, das kreis- oder ellipsenförmig um die Anzeigevorrichtung 135 gelegt ist. Das Leuchtband kann beispielsweise eine Anzahl LED umfassen, die angesteuert werden können, eines oder mehrere zusammenhängende Bänder oder Linien darzustellen. Es ist insbesondere bevorzugt, dass der Kopfabschnitt 155 der Vorrichtung eine kreisrunde oder ellipsenförmige Außenkontur umfasst, wobei das Leuchtband an der Kontur entlang geführt sein kann. In einer anderen Ausführungsform werden die Begrenzung 505 und die Augen 510 mittels der gleichen Ausgabevorrichtung 135, 140 dargestellt. Es kann ein Farbschema für die Begrenzung 505 und die Augen 510 vorgegeben sein; beispielsweise können die Begrenzung 505 in rot und die Augen 510 in weiß dargestellt werden. Ein anderes beispielhaftes Farbschema sieht eine blaue Begrenzung 505 und blaue Augen 510 vor. Die Darstellung kann hell auf dunkel oder dunkel auf hell erfolgen.

Das Gesicht 500 kann animiert werden, etwa indem einer oder mehrere der oben genannten Parameter über die Zeit verändert werden. Es ist bevorzugt, kurze Bewegungssequenzen als Animationen zu definieren. Ein komplexerer Ausdruck des Gesichts 500 kann aus mehreren Darstellungen und/oder Animationen zusammengesetzt werden.

Im Folgenden werden beispielhafte Darstellungen und Animationen des Gesichts 500 näher erläutert. Falls nicht anders angegeben, weiden einzelne Darstellungen in Leserichtung von links nach rechts und von oben nach unten dargestellt. Dabei können Übergänge fließend sein. Eine umgekehrte Abfolge kann für einen umgekehrten Zweck verwendet werden. In allen Varianten kann sich die Begrenzung 505 zur Darstellung einer Kopfbewegung nach oben oder unten drehen, um die jeweilige Situation oder empathische Emotion zu unterstreichen.

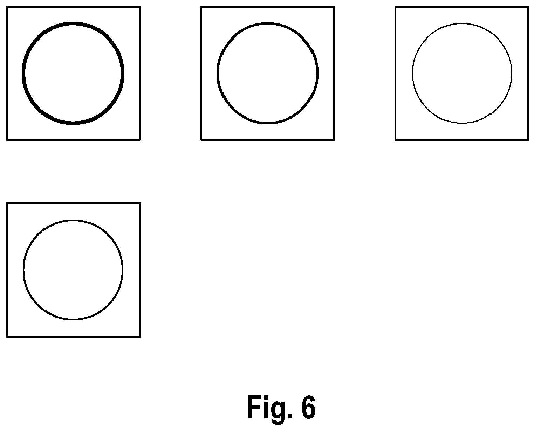

Figur 6 zeigt das Gesicht 500 in einem Bereitschaftszustand wie dem Zustand 215. Die Augen 510 sind nicht dargestellt und die Begrenzung 510 kann pulsieren. Dabei kann eine Linie, mit der die Begrenzung 505 dargestellt ist, in ihrer Intensität variiert werden.

Das Variieren kann eine Änderung der Farbe, der Strichstärke oder der Helligkeit der Linie der Begrenzung 505 umfassen.

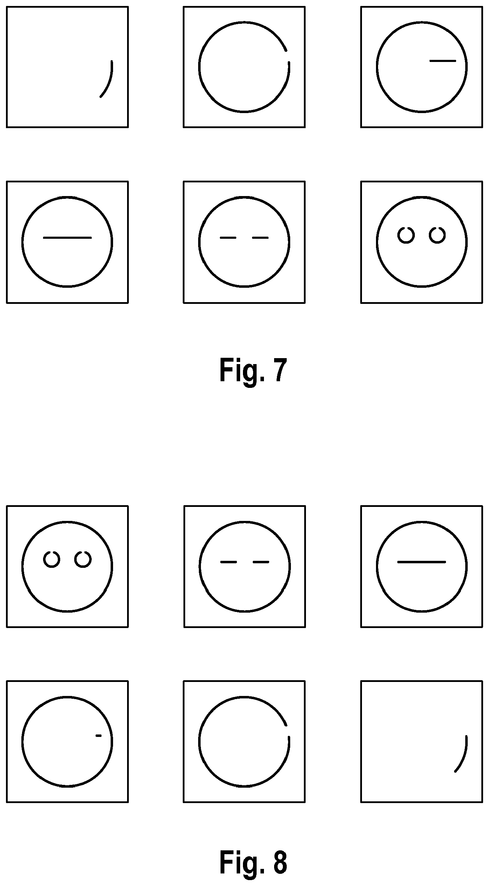

Figur 7 zeigt einen beispielhaften Übergang 210.2 von einem Ruhezustand in einen Bereitschaftszustand. Die Linie der Begrenzung 505 kann sukzessive aufgebaut werden, insbesondere durch Verlängern eines Strichs im Uhrzeigersinn. Die Augen 510 können aus einem einzelnen Strich hervorgehen, der länger wird und sich dann in zwei Abschnitte teilt. Am Ende können die Augen 510 geöffnet werden, indem sie statt als Striche als Kreise oder Kreisbögen dargestellt werden. Von links nach rechts und von oben nach unten ist also eine Sequenz von aufeinanderfolgenden Darstellungen gezeigt.

Figur 8 zeigt einen beispielhaften Übergang 210.1 von einem Bereitschaftszustand in einen Ruhezustand. Die Abfolge von Figur 7 kann dabei in umgekehrter Reihenfolge durchlaufen werden.

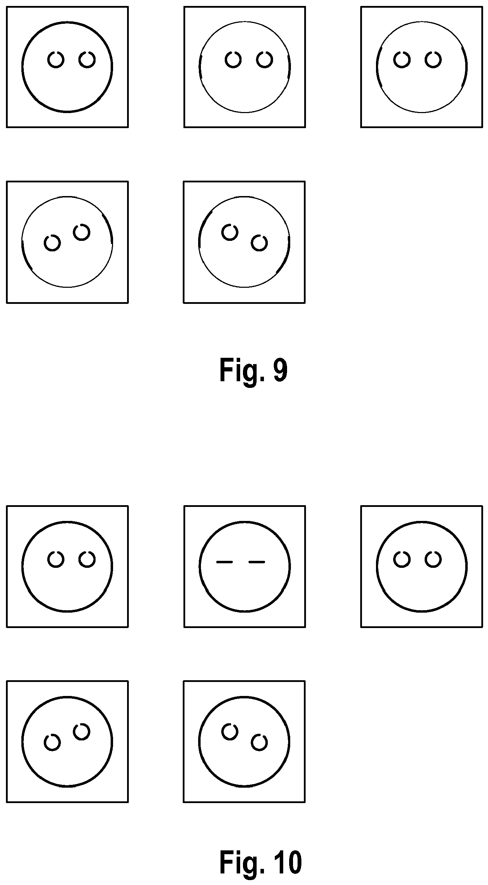

Figur 9 zeigt eine beispielhafte Darstellung zur Kennzeichnung eines Zustands, in welchem die Vorrichtung 100 eine akustische Ausgabe, insbesondere in Form von Sprache, tätigt. Dazu kann die Begrenzung in zwei kurze Linien geteilt werden, die links und rechts des Gesichts 500 die Anmutung von Ohren haben können. Die Linien können nach Art einer Aussteuerungs- oder Lautstärkenanzeige in Abhängigkeit einer ausgegebenen Lautstärke in vertikaler Richtung unterschiedlich groß dargestellt werden. Die Augen 510 bleiben geöffnet und können zusammen mit dem Kopf geneigt werden.

Figur 10 zeigt eine beispielhafte Darstellung zur Kennzeichnung eines Zustands, in welchem die Vorrichtung 100 eine akustische Eingabe, insbesondere in Form von Sprache, abtastet. In ähnlicher Weise wie bei der akustischen Ausgabe können wieder symbolische Ohren gebildet werden, die in Abhängigkeit einer akustischen Eingabe in ihrer Länge variiert werden können.

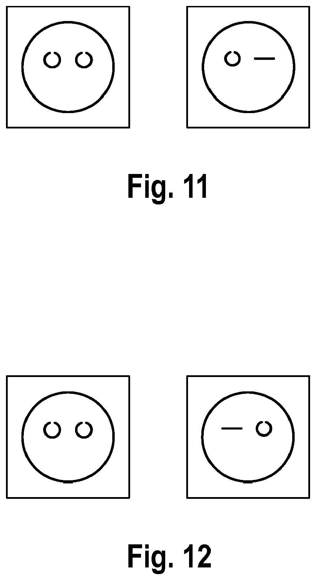

Figur 11 zeigt in Zwinkern mit einem linken Auge 510 und Figur 12 ein Zwinkern mit einem rechten Auge 510. Dazu wird das zwinkernde Auge vorübergehend auf eine kurze horizontale Linie reduziert.

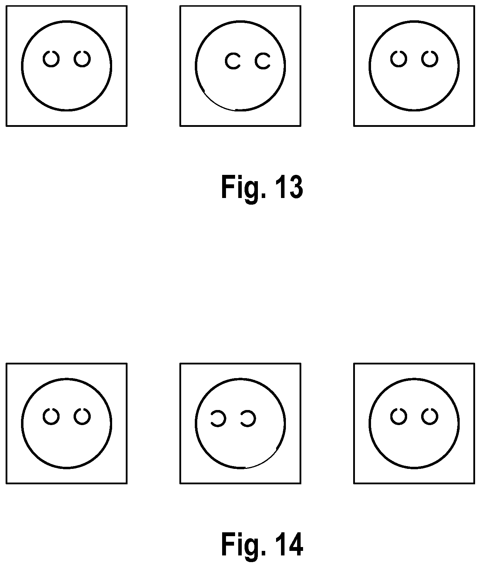

Figur 13 zeigt ein Bewegen der Augen 510 nach links und Figur 14 nach rechts. Die Blickrichtung wird bevorzugt durch ein Vergrößern des Mittelpunktswinkels der Kreisbögen der Augen 510 und ihr Ausrichtung definiert. Die Augen 510 können auf entsprechende Weise auch nach oben oder unten bewegt werden. Die Begrenzung 505 kann eine Aussparung zeigen, die die Anmutung eines Halses oder Mundes haben kann. Der Hals oder Mund kann parallel zur Augenbewegung schwingen.

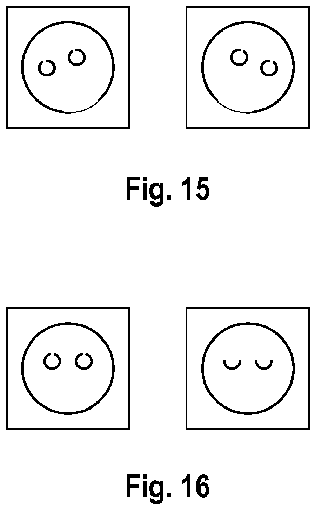

Figur 15 zeigt das Neigen des Kopfes 500. Die Kreisbögen der Augen 510 können oben geöffnet sein. Eine Achse, die Mittelpunkte der Augen 510 miteinander verbindet, kann geschwenkt werden. Die Begrenzung 505 kann den oben erwähnten Mund oder Hals andeuten.

Figur 16 zeigt eine beispielhafte Darstellung eines Schlafzustands wie beispielsweise des Zustands 210. Die Augen 510 sind als oben geöffnete Halbkreise dargestellt. Die Begrenzung 505 kann einem vollständigen Kreis entsprechen.

Die folgenden Figuren 17 bis 22 zeigen exemplarische Animationen von Symbolen 400 (vgl. Figur 4). Das Einleiten eines Zustands kann insbesondere durch Aufbauen des Symbols 400 und das Ausleiten durch Abbauen des Symbols 400 dargestellt werden. Das Andauern des Zustands kann auch durch wiederholtes Aufbauen oder Auf- und Abbauen des Symbols 400 ausgegeben werden.

Figur 17 zeigt das Auf- und Abbauen eines Symbols 400, das auf einen Kaffee oder eine Kaffeemaschine 110 hinweist. Zusammen mit dem Symbol 400 kann sich die Begrenzung 505 aufbauen. Die Begrenzung 505 kann sich insbesondere im Uhrzeigersinn auf- und gegebenenfalls auch wieder abbauen. Geschwindigkeiten des Auf- oder Abbaus des Symbols 400 und der Begrenzung 505 sind bevorzugt im Wesentlichen gleich.

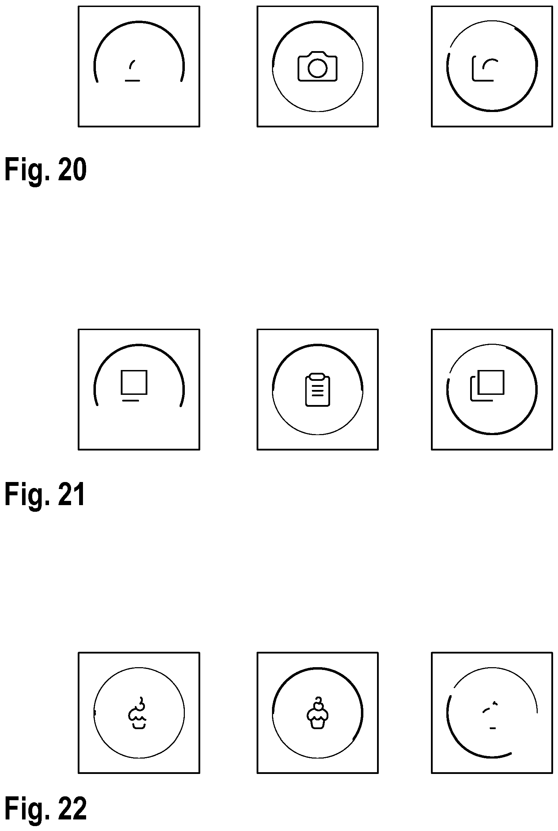

Figur 18 zeigt das Auf- und Abbauen eines Symbols 400 für eine Waschmaschine und Figur 19 eines Symbols 400 für den Projektor 140. Figur 20 zeigt ein Symbol 400 für die Kamera 145, Figur 21 für eine Einkaufsliste und Figur 22 für ein Rezept. Animationen können jeweils erfolgen wie oben mit Bezug auf Figur 17 erläutert wurde.

### Bezugszeichen

- 100: Vorrichtung
- 105: Benutzer
- 110: Hausgerät
- 115: Verarbeitungseinrichtung
- 120: Schnittstelle
- 125: akustische Eingabevorrichtung
- 130: akustische Ausgabevorrichtung
- 135: Anzeigevorrichtung
- 140: Projektor
- 145: Kamera
- 150: Aktor
- 155: Kopfabschnitt
- 160: Basisabschnitt
- 165: haptische Eingabevorrichtung
- 170: Taster
- 175: Leuchtring
- 180: Matrixanzeige
- 185: Eingabeeinrichtung
- 190: Ausgabeeinrichtung

- 200: Verfahren
- 205: Stromlos
- 210: Aus
- 215: Bereit
- 220: Dialog
- 225: Laden
- 230: Pause
- 235: Berührung

- 500: Gesicht
- 505: Begrenzung
- 510: Auge

## Patentansprüche

1. Vorrichtung (100) zur Steuerung eines Hausgeräts (110), wobei die Vorrichtung (100) folgendes umfasst:
- eine erste und eine zweite Ausgabevorrichtung (190);
- eine Verarbeitungseinrichtung (115), die dazu eingerichtet ist, einen von mehreren Zuständen (205-235) einzunehmen,
- wobei jedem Zustand (205-235) wenigstens ein anderer Zustand (205-235) zugeordnet ist, in den übergegangen werden kann;
- wobei einer der Zustände (205-235) der Kommunikation eines Benutzers (105) mit der Vorrichtung (100) und einer der Zustände (205-235) der Kommunikation der Vorrichtung (100) mit dem Hausgerät (110) zugeordnet ist;
- wobei die Verarbeitungseinrichtung (115) ferner dazu eingerichtet ist, den aktuellen Zustand (205-235) dem Benutzer (105) mittels der Ausgabevorrichtungen (190) anzuzeigen.

2. Vorrichtung (100) nach Anspruch 1, ferner umfassend eine erste Eingabevorrichtung (185) zum Abtasten einer Benutzereingabe, wobei ein Übergang vom aktuellen Zustand (205-235) in den weiteren Zustand (205-235) auf der Basis der Benutzereingabe steuerbar ist.

3. Vorrichtung (100) nach Anspruch 2, ferner umfassend eine zweite Eingabevorrichtung (185), wobei jedem Übergang zugeordnet ist, welche Eingabevorrichtung (185) verwendet werden kann.

4. Vorrichtung (100) nach Anspruch 3, wobei die erste Eingabevorrichtung (185) die Benutzereingabe optisch, akustisch oder haptisch aufnimmt und die zweite Eingabevorrichtung (185) die Benutzereingabe auf eine andere Weise als die erste Eingabevorrichtung (185) aufnimmt.

5. Vorrichtung (100) nach einem der vorangehenden Ansprüche, wobei die erste Ausgabevorrichtung (190) den Zustand (205-235) optisch, akustisch oder haptisch anzeigt und die zweite Ausgabevorrichtung (190) den Zustand (205-235) auf eine andere Weise als die erste Ausgabevorrichtung (190) anzeigt.

6. Vorrichtung (100) nach einem der Ansprüche 2 bis 5, wobei die Verarbeitungseinrichtung (115) dazu eingerichtet ist, mittels wenigstens einer der Ausgabevorrichtungen (190) einen Hinweis auszugeben, welche Eingabevorrichtung (185) im aktuellen Zustand (205-235) für die Benutzereingabe verwendet werden kann.

7. Vorrichtung (100) nach Anspruch 6, wobei einer Ausgabevorrichtung (190) eine Eingabevorrichtung (185) zugeordnet ist, sodass der aktuelle Zustand (205-235) mittels der Ausgabevorrichtung (190) angezeigt wird, der eine Eingabevorrichtung (185) zugeordnet ist, die zum Übergang in einen weiteren Zustand (205-235) verwendet werden kann.

8. Vorrichtung (100) nach einem der vorangehenden Ansprüche, wobei die Vorrichtung dazu eingerichtet ist, den aktuellen Zustand (205-235) mittels einer symbolischen optischen Darstellung eines Gesichts (500) auszudrücken, wobei das Gesicht (500) insbesondere eine symbolische Strichdarstellung umfasst.

9. Vorrichtung (100) nach Anspruch 8, wobei das Gesicht (500) eine kreisbogenförmige Begrenzung (505) und zwei kreisbogenförmige Augen (510) umfasst.

10. Vorrichtung (100) nach Anspruch 9, wobei die kreisbogenförmige Begrenzung (505) eine Aussparung aufweist, die einen Hals symbolisiert, oder die kreisbogenförmige Begrenzung (505) in zwei Teile untergliedert ist, die Ohren symbolisieren, wobei insbesondere eine Größe der Ohren von einer akustischen Ausgabe oder einer akustischen Eingabe abhängt.

11. Vorrichtung (100) nach einem der Ansprüche 8 bis 10, wobei das Gesicht (500) animiert ist.

12. Hausgerät (110) mit einer Vorrichtung (100) nach einem der vorhergehenden Ansprüche.

13. Verfahren (200) zum Steuern eines Hausgeräts (110) mittels einer Vorrichtung (100), wobei die Vorrichtung (100) folgendes umfasst:
- eine erste und eine zweite Ausgabevorrichtung (190);
- eine Verarbeitungseinrichtung (115), die sich in einem von mehreren Zuständen befinden kann,
- wobei jedem Zustand (205-235) wenigstens ein anderer Zustand (205-235) zugeordnet ist, in den übergegangen werden kann,
- wobei einer der Zustände der Kommunikation eines Benutzers (105) mit der Vorrichtung (100) und einer der Zustände der Kommunikation der Vorrichtung (100) mit dem Hausgerät (110) zugeordnet ist;
und wobei das Verfahren (200) folgende Schritte umfasst:
- Anzeigen eines aktuellen Zustands (205-235), den die Verarbeitungseinrichtung (115) einnimmt, mittels der Ausgabevorrichtungen (190).

14. Verfahren (200) nach dem vorangehenden Anspruch, wobei die Kommunikation des Benutzers (105) mit der Vorrichtung (100) eine natürlichsprachige Ein- oder Ausgabe umfasst.

15. Verfahren (200) nach Anspruch 14, wobei eine Ein- oder Ausgabe der Vorrichtung (100) von einem Betriebszustand des Hausgeräts (110) abhängig ist.
